# DEMANDE DE BREVET EUROPEEN

(11) **EP 0 903 689 A1**
(43) Date de publication de la demande: **24.03.1999**
(21) Numéro de dépôt: 98402304.4
(22) Date de dépôt: 17.09.1998
(51) Int. Cl.: G06K 19/07, G06K 7/08, H04L 25/06, H04L 27/08

(54) **Démodulateur pour carte à puce sans contact**

(30) Priorité: 23.09.1997 FR 9711788
(71) Demandeur: STMicroelectronics SA, 94250 Gentilly Cedex (FR)
(72) Inventeur: Roberts, Andrew, 75116 Paris (FR); Subbiotto, Frédéric, 75116 Paris (FR)
(74) Mandataire: Ballot, Paul Denis Jacques

(57) **Abrégé**

L'invention concerne les cartes à puce sans contact dont les données binaires sont transmises en radiofréquence.

L'invention concerne un démodulateur de données binaires qui comprend un circuit de détection (10) des signaux transmis, un circuit de redressement (12), un filtre passe-bande (14), un étage comparateur (16) et un circuit mémoire (18). Le filtre passe-bande (14) fournit un signal basse fréquence V_{REF} qui sert de référence aux deux comparateurs (CP₁, CP₂) et un signal haute fréquence V_{FB} qui est comparé aux références (V_{D}, V_{E} variant avec V_{REF}. De la sorte, la démodulation est indépendante du niveau moyen du signal reçu.

Application aux cartes à puce.

## Description

L'invention concerne les cartes à puce sans contact dans lesquelles la transmission des données binaires entre l'appareil utilisateur et la carte s'effectue à fréquence radio et, plus particulièrement dans de telles cartes, le circuit de démodulation pour détecter les données dans les signaux reçus de l'appareil utilisateur.

Dans les cartes à puce sans contact, il est connu de transmettre les données binaires de l'appareil utilisateur vers la carte par l'intermédiaire d'un signal à une fréquence porteuse de 13,56 Mhz qui est modulé en amplitude par les chiffres binaires du code à transmettre.

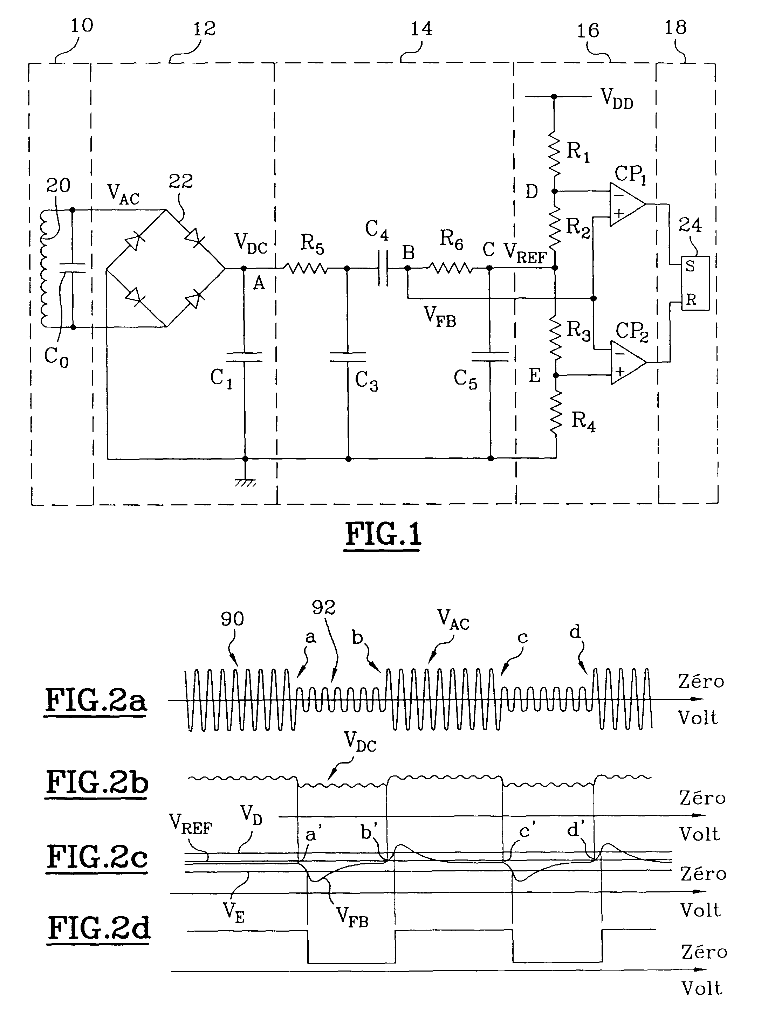

Les signaux modulés en amplitude ont par exemple la forme représentée par le diagramme de la figure 2-a dans lequel la différence entre un chiffre 1 (référence 30) et un chiffre 0 (référence 32) apparaît dans la variation d'amplitude.

Cette variation d'amplitude du signal reçu par la carte serait facile à détecter par un seuil fixe dans le cas où les signaux reçus auraient le même niveau moyen au cours du temps. Or il n'en est pas ainsi car il varie notamment en fonction de la distance entre la carte et l'appareil utilisateur, par exemple, lorsque la carte est manipulée pour l'entrée et la sortie dans l'appareil utilisateur. Il peut ainsi varier d'un appareil à un autre ou d'une carte à l'autre.

Le but de la présente invention est donc de réaliser un démodulateur pour carte à puce sans contact qui est insensible au niveau du signal reçu.

Ce but est atteint en faisant varier le seuil de détection des chiffres binaires en fonction du niveau moyen du signal reçu.

L'invention concerne donc un démodulateur pour carte à puce sans contact à transmission par un signal radiofréquence.

Démodulateur de données binaires pour carte à puce sans contact à transmission par signal radiofréquence caractérisé en ce qu'il comprend :
- un circuit de détection du signal transmis qui fournit un signal V_{AC},
- un circuit de redressement du signal détecté V_{AC} qui fournit un signal redressé V_{DC},
- un filtre passe-bande auquel est appliqué le signal redressé V_{DC} et qui fournit deux signaux, l'un V_{REF} à fréquence basse et l'autre V_{FB} fréquence haute,
- un étage comparateur auquel sont appliqués les signaux V_{REF} et V_{FB} pour les comparer entre eux, et
- un circuit mémoire pour enregistrer le résultat de la comparaison réalisée par l'étage comparateur.

D'autres caractéristiques et avantages de la présente invention apparaîtront à la lecture de la description suivante d'un exemple particulier de réalisation, ladite description étant faite en relation avec le dessin joint dans lequel :
- la figure 1 est un schéma électrique d'un démodulateur pour carte à puce sans contact selon l'invention, et
- les figures 2-a à 2-d sont des diagrammes de signaux à certains points du schéma du démodulateur de la figure 1.

Le démodulateur pour carte à puce sans contact à transmission par une porteuse radiofréquence comprend :
- un circuit de détection 10 du signal transmis par l'appareil utilisateur qui fournit un signal V_{AC},
- un circuit de redressement 12 du signal détecté V_{AC} qui fournit un signal redressé V_{DC},
- un filtre passe-bande 14 auquel est appliqué le signal redressé V_{DC} et qui fournit deux signaux, l'un V_{REF} à fréquence basse et l'autre V_{FB} à fréquence haute,
- un étage comparateur 16 auquel sont appliqués les signaux V_{REF} et V_{FB} pour les comparer entre eux, et
- un circuit mémoire 18 pour enregistrer le résultat de la comparaison réalisée par l'étage comparateur 16.

Le circuit de détection 10 est constitué par un circuit résonant comprenant une boucle d'antenne représentée par les spires d'un bobinage 20 et un condensateur C₀ en parallèle. Cette boucle d'antenne est réalisée par quelques spires logées dans l'épaisseur de la carte à puce (non représentée). Le signal détecté V_{AC} (figure 2-a) qui est appliqué au circuit de redressement 12 qui est constitué d'un pont à quatre diodes 22 pour un redressement double alternance et d'un condensateur C₁.

Le signal redressé V_{DC} (figure 2-b) aux bornes du condensateur C₁ est appliqué au filtre passse-bande 14 qui comprend schématiquement un filtre passe-haut et un filtre passe-bas.

Le filtre passe-haut est constitué schématiquement d'une résistance R₅ et des condensateurs C₃ et C₄. Une borne de la résistance R₅ est connectée en point commun A du condensateur C₁ et d'une des bornes de sortie du pont à diodes 22 tandis que l'autre borne est connectée au point commun des condensateurs C₃ et C₄. L'autre borne du condensateur C₃ est connectée à la masse tandis que l'autre borne du condensateur C₄ constitue la borne de sortie B du signal V_{FB}.

La fréquence de coupure du filtre passe-haut doit être choisie pour passer sans affaiblissement notable les données binaires.

Le filtre passe-bas est constitué schématiquement de la résistance R₆ et du condensateur C₅. Une borne de la résistance R₆ est connectée à la borne de sortie B tandis que l'autre borne constitue la borne de sortie C du signal V_{REF}. Le condensateur C₅ a une borne qui est connectée en point C tandis que l'autre borne est connectée à la masse.

Le filtre passe-bas doit être calculé pour minimiser l'ondulation à la fréquence porteuse et pour déterminer la composante continue du signal.

L'étage comparateur 16 comprend deux comparateurs CP₁ et CP₂, chacun comprenant deux bornes d'entrées référencées - et +. Le point B est connecté directement, d'une part, à la borne d'entrée + du comparateur CP₁ et d'autre part, à la borne d'entrée - du comparateur CP₂ de sorte que ces deux bornes d'entrée reçoivent en entier le signal V_{FB}.

Le point C est connecté, via un diviseur de tension à résistances, d'une part, à la borne d'entrée - du comparateur CP₁ et, d'autre part, à la borne d'entrée + du comparateur CP₂ de sorte que ces deux bornes d'entrée reçoivent une partie du signal V_{REF}.

Dans le cas du comparateur CP₁, le diviseur de tension comprend les résistances R₁ et R₂ connectées en série entre le point C et la tension d'alimentation V_{DD} et c'est le signal V_{D} apparaissent au point commun D des résistances R₁ et R₂ qui est appliqué au comparateur CP₁.

Dans le cas du comparateur CP₂, le diviseur de tension comprend les résistances R₃ et R₄ connectées en série entre le point C et la masse et c'est le signal V_{E} apparaissant au point commun des résistances R₃ et R₄ qui est appliquée en comparateur CP₂.

Ces tensions V_{D} et V_{E} servent respectivement de références ou de seuils aux comparateurs CP₁ et CP₂. vis-à-vis du signal V_{FB} avec V_{D} ayant une valeur supérieure à V_{REF} mais inférieure à V_{DD} et V_{E} ayant une valeur inférieure à V_{REF} mais supérieure à la masse.

Le circuit mémoire 18 comprend un circuit bistable 24 qui est mis à l'état 1 par un signal appliqué à sa borne d'entrée S et qui est mis à l'état 0 par un signal appliqué à sa borne d'entrée R.

La borne de sortie du comparateur CP₁ est connectée à la borne d'entrée S tandis que la borne de sortie du comparateur CP₂ est connectée à la borne d'entrée R.

Le fonctionnement du démodulateur selon l'invention est alors le suivant. Le signal alternatif haute fréquence V_{AC} (figure 2-a) détecté par le circuit 10 est redressé par le circuit 12 pour donner le signal V_{DC} (figure 2-b). Le signal V_{AC} est filtré dans le filtre passe-haut pour donner au point B le signal V_{FB} (figure 2-c) qui suit les transitions a, b, c, d, des données binaires par des variations accentuées aux points a',b',c',d', correspondant aux transitions a, b, c, d du signal V_{AC}.

Le signal V_{FB} est comparé respectivement aux seuils V_{D} et V_{E} dans les comparateurs CP₁ et CP₂ de sorte que le circuit bistable 20 passe à l'état 1 lorsque V_{FB} dépasse le seuil V_{D} (b',d') et passe à l'état 0 lorsque V_{FB} passe sous le seuil V_{E} (a',c') (figure 2.d)

Comme les seuils V_{D} et V_{E} sont déterminés à partir du signal V_{REF} à fréquence basse représentatif du niveau moyen du signal reçu. Ces seuils évoluent de la même manière que V_{REF}, c'est-à-dire en fonction du niveau moyen. Il en résulte que la démodulation est indépendante de ce niveau moyen, ce qui est le but recherché.

L'invention a été décrite avec un démodulateur comprenant des circuits de détection 10 et de redressement 12 affectés à ce démodulateur mais il est vrai que les circuits peuvent déjà exister dans la carte à puce pour recueillir l'énergie d'alimentation et créer la tension d'alimentation V_{DD}. Dans ce cas, le démodulateur selon l'invention sera connecté au point A qui sera aussi connecté au circuit d'alimentation.

Les éléments du démodulateur selon l'invention sont réalisés sous forme d'un circuit intégré monolithique de sorte que les résistances et les condensateurs sont réalisés par des transistors selon des montages connus et facilement réalisables par un homme de métier sans faire oeuvre d'invention.

Les données binaires transmises ont été présentées sous la forme d'une modulation dite de "Non retour à Zéro" mais le démodulateur de l'invention peut aussi être utilisée pour démoduler des données binaires selon d'autres modulations telles que la modulation biphase.

## Revendications

1. Démodulateur de données binaires pour carte à puce sans contact à transmission par signal radiofréquence caractérisé en ce qu'il comprend :
- un circuit de détection (10) du signal transmis qui fournit un signal V_{AC},
- un circuit de redressement (12) du signal détecté V_{AC} qui fournit un signal redressé V_{DC},
- un filtre passe-bande (14) auquel est appliqué le signal redressé V_{DC} et qui fournit deux signaux, l'un V_{REF} à fréquence basse et l'autre V_{FB} à fréquence haute,
- un étage comparateur (16) auquel sont appliqués les signaux V_{REF} et V_{FB} pour les comparer entre eux, et
- un circuit mémoire (18) pour enregistrer le résultat de la comparaison réalisée par l'étage comparateur (16).

2. Démodulateur selon la revendication 1 caractérisé en ce que l'étage comparateur comprend deux comparateurs (CP₁, CP₂) auxquels sont appliqués le signal V_{FB} à fréquence haute ainsi que deux valeurs de seuil, l'une (V_{D}) supérieure à V_{REF} pour un premier comparateur (CP₁) et l'autre (V_{E}) inférieure à V_{REF} pour le deuxième comparateur (CP₂).

3. Démodulateur selon la revendication 2, caractérisé en ce que les valeurs de seuil (V_{D}, V_{E}) sont obtenues chacune à l'aide d'un diviseur de tension à résistances (R₁, R₂) (R₃, R₄).

4. Démodulateur selon l'une des revendications 1 à 3, caractérisé en ce que le circuit mémoire (18) est un circuit bistable (24) dont la borne d'entrée de mise à l'état 1 est connectée à la borne de sortie du premier comparateur (CP₁) et dont la borne d'entrée de mise à l'état 0 (R) est connectée à la borne de sortie du deuxième comparateur (CP₂).

5. Démodulateur selon l'une quelconque des revendications précédentes, caractérisé en ce que le filtre passe-bande (14) comprend :
- un filtre passe-haut dont la fréquence de coupure est pour passer sans affaiblissement les données binaires et,
- un filtre passe-bas dont la fréquence de coupure est choisie pour minimiser l'ondulation à la fréquence porteuse et déterminer la composante continue du signal.

6. Démodulateur selon l'une quelconque des revendications précédentes 1 à 5, caractérisé en ce que le circuit de redressement (12) est un pont à quatre branches, chaque branche comportant une diode.
